# EUROPEAN PATENT APPLICATION

(11) **EP 2 036 789 A1**
(43) Date of publication of application: **18.03.2009**
(21) Application number: 07018016.1
(22) Date of filing: 13.09.2007
(51) Int. Cl.: B60R 25/02

(54) **Automobile steering lock**

(71) Applicant: Yu, Pin-Ying, Tainan City (TW)
(72) Inventor: Yu, Pin-Ying, Tainan City (TW)
(74) Representative: Volpert, Marcus

(57) **Abstract**

An automobile steering lock includes a steering wheel lock (2), provided with a base (20), a locking portion (21) and a stationary rod (22). The base (20) has a through groove (23) bored with a dead bolt hole (232) on its inner sidewall. A pressing lock core (24) located outside the base (20) has a dead bolt (240) to be inserted into the dead bolt hole (232). A restricting plate (25) fixed on a bottom of the through groove (23) has a sliding rail (251) and plural through holes (250). A locking member (26) has a sliding rod (260) formed at its top for being fitted in the through groove (23), a through hole (261) bored through the sliding rod (260) for being inserted by the dead bolt (240), and at least one sliding groove (262) cut near a bottom of the sliding rod (260). The locking member (26) also has a blocking plate (263) at a bottom. The steering wheel lock (2) is easy to use but uneasy to be broken, achieving anti-theft purpose. The sliding groove (262) cooperates with the sliding rail (251).

## Description

### BACKGROUND OF THE INVENTION

### 1. Field of the Invention

This invention relates to an automobile steering lock, particularly to one that is easy to be operated but uneasy to be broken, really achieving anti-theft purpose.

### 2. Description of the Prior Art

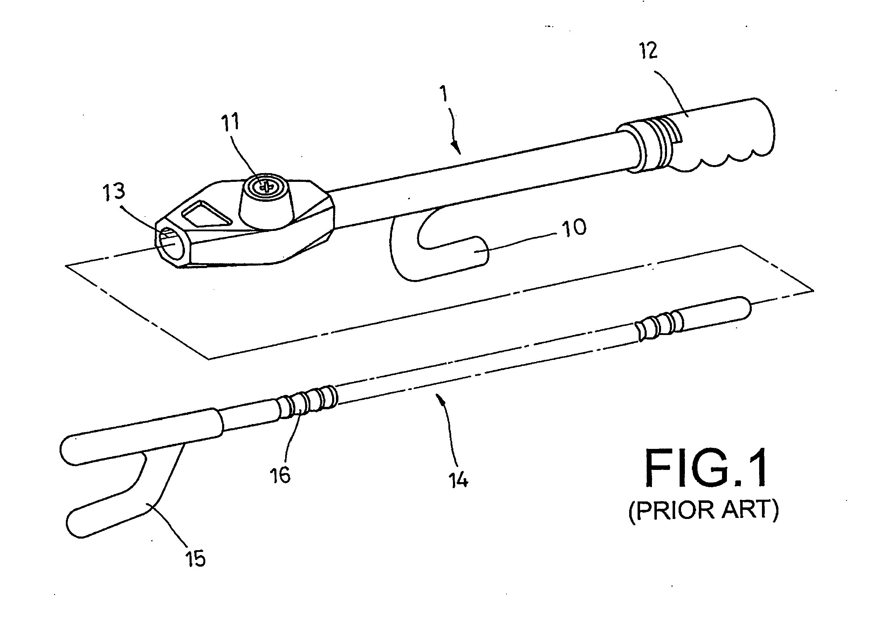

Commonly, as shown in Fig. 1, a conventional automobile steering lock has mainly a main body 1 that is provided with a hook 10 located underneath, a lock core 11 set above, a grip 12 formed at its one end, and a through hole 13 cut axially at the other end for a telescopic rod 14 to move along. The telescopic rod 14 is provided with a hook 15 located at its one end and a stage of continual locking grooves 16 formed on a preset section. In using, first, put the steering lock on a steering wheel and make the hook 10 fitted with an inner edge of the wheel. Next, pull outward the telescopic rod 14 to keep the hook 15 fitted with an inner edge of the wheel at the other side. By the time, the tail portion of the main body 1 is extended far enough between the steering wheel and the driver's seat to prevent the steering wheel from turned around. However, if the telescopic rod 14 or the main body 1 is beaten vigorously in a reverse direction by a burglar, a deadbolt of the lock core 11 is apt to be rebounded or broken to get unlocked, losing an anti-theft effect.

### SUMMARY OF THE INVENTION

The objective of this invention is to offer an automobile steering lock that is easy for using but uneasy to be broken, really achieving anti-theft purpose.

The main feature of the invention is to provide a base (20) having a through groove (23) formed in the base (20) and a pressing lock core (24) located at an outer side of the base (20), the through groove (23) provided with a dead bolt hole (232) bored on one of inner sidewalls thereof, the pressing lock core (24) provided with a dead bolt (240) able to pass through the through groove (23) to enter the dead bolt hole (232);
a restricting plate (25) attached on a bottom of the through groove (23) and provided with a sliding rail (251) formed centrally and a plurality of through holes (250); and,
a locking member (26) capable of being fitted in the through groove (23) and provided with a sliding rod (260) formed at a top portion thereof, a through hole (261) bored horizontally through the sliding rod (260) for being inserted by the dead bolt (240) of the pressing lock core (24), and at least one sliding groove (262) cut near a bottom of the sliding rod (260), the locking member (26) also provided with a blocking plate (263) formed at a bottom thereof.

### BRIEF DESCRIPTION OF DRAWINGS

This invention is better understood by referring to the accompanying drawings, wherein:
Fig. 1 is a perspective view of a conventional automobile steering lock;
Fig. 2 is an exploded perspective view of an automobile steering lock in the present invention;
Fig. 3 is a perspective view of the automobile steering lock in the present invention;

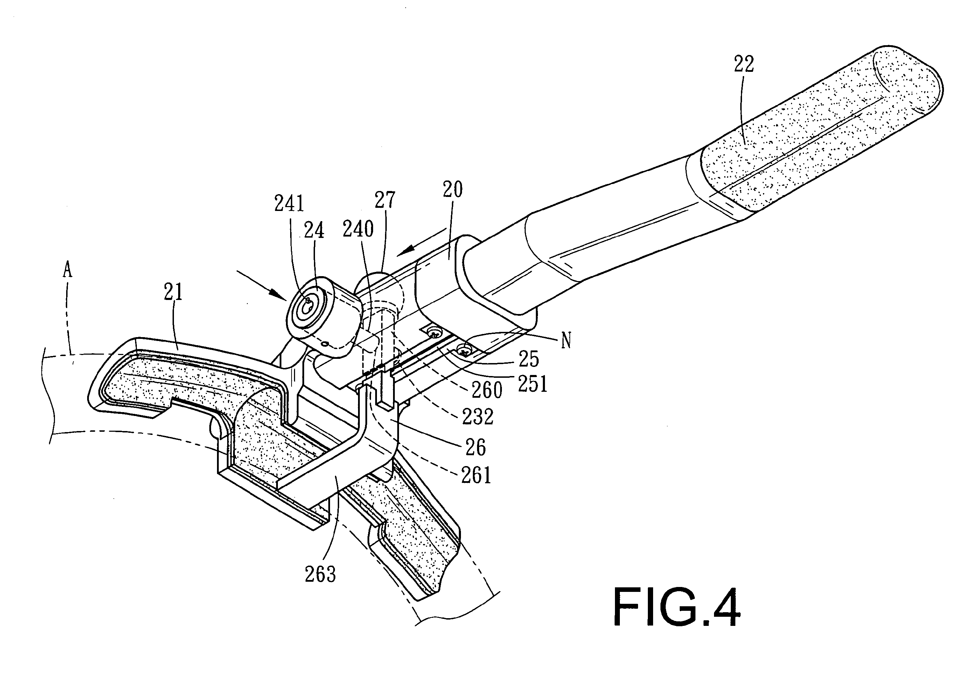

Fig. 4 is a perspective view of the automobile steering lock in the present invention, showing it being locked;

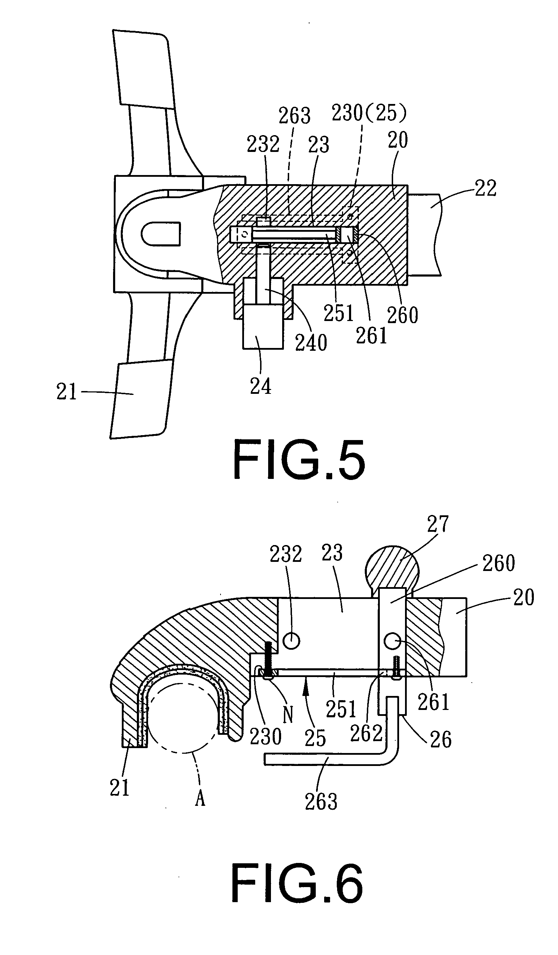

Fig. 5 is a top cross-sectional view of the automobile steering lock in the present invention;
Fig. 6 is a side view of Fig. 5;

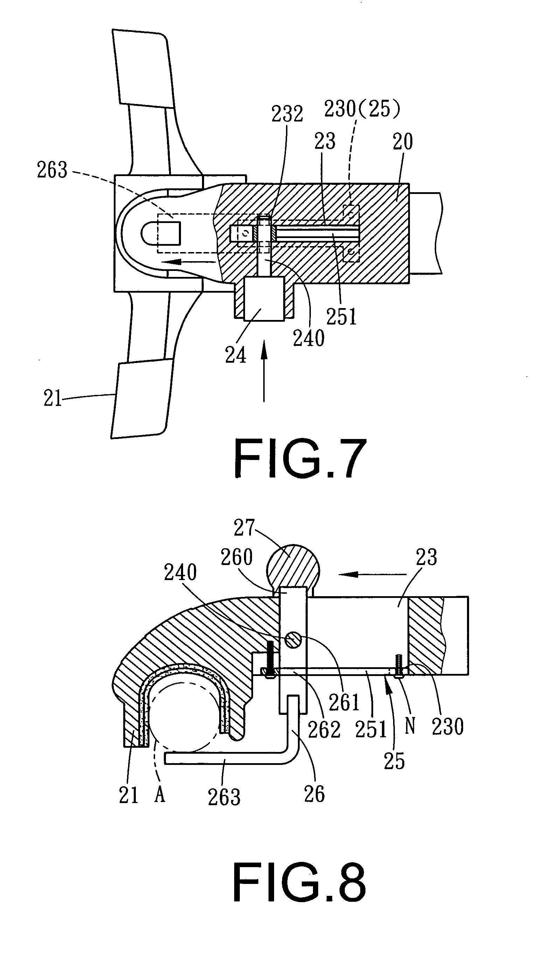

Fig. 7 is a top cross-sectional view of the automobile steering lock in the present invention, showing it being locked; and,
Fig. 8 is a side view of Fig. 7.

### DETAILED DESCRIPTION OF THE PREFERRED EMBODIMENT

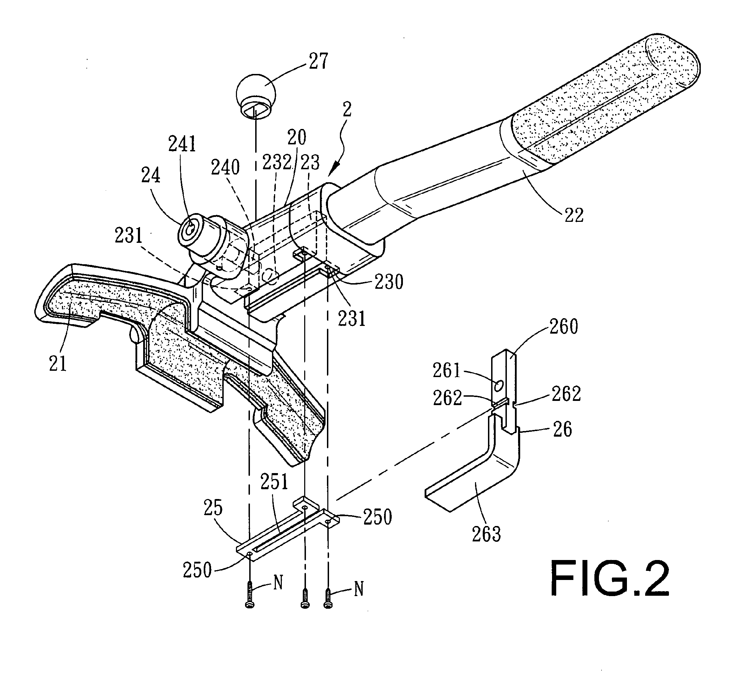

As shown in Fig. 2, a preferred embodiment of an automobile steering lock in the present invention mainly includes a steering wheel lock 2, which is provided with a base 20, a locking portion 21 located in front of the base 20 and a stationary rod 22 formed behind the base 20. A rectangular through groove 23 is formed in the base 20, provided with a nearly T-shaped recess 230 formed at its bottom, a plurality of threaded holes 231 bored in the through groove 23 and the recess 230, and a dead bolt hole 232 bored in one of its inner sidewalls. Located at an outer side of the base 20 is a pressing lock core 24 that is provided with a dead bolt 240 extendable through the through groove 23 into the dead bolt hole 232, and a keyway 241 formed at its outer end. A restricting plate 25 is threadably fitted in the recess 230 at the bottom of the through groove 23, provided with a plurality of through holes 250 corresponding to the plurality of threaded holes 231 bored in the through groove 23 and the recess 230, and a sliding rail 251 formed centrally and longitudinally to correspond to the opening of the through groove 23. A locking member 26 capable of being fitted in the through groove (23) is provided with a sliding rod 260 formed at its top portion to be inserted into the through groove 23, a through hole 261 bored horizontally through the sliding rod 260 for being inserted by the dead bolt 240 of the pressing lock core 24, a sliding groove 262 cut respectively at two sides near a bottom of the sliding rod 260 The locking member 26 also has a L-shaped blocking plate 263 formed at its bottom. The top of the sliding rod 260 is mounted with a holding knob 27.

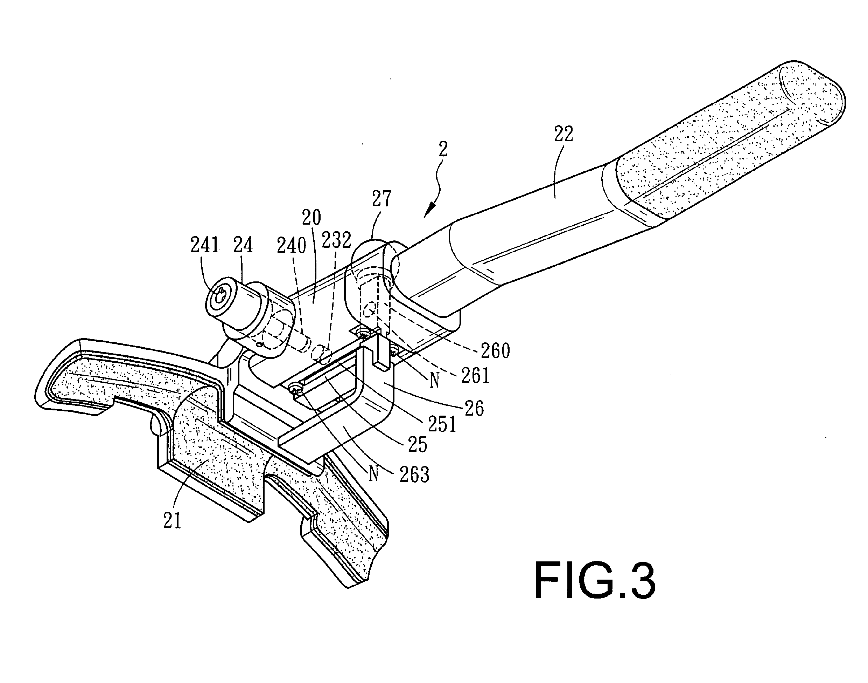

In assembly, as shown in Figs. 2 and 3, firstly, hold the locking member 26 with the blocking plate 263 heading toward the locking portion 21 to make the locking member 26 engaged with the restricting plate 25 by having the sliding grooves 262 aligned to and passing into the sliding rail 251. Secondly, insert the sliding rod 260 into the through groove 23. Thirdly, keep the restricting plate 25 positioned in the recess 230 of the through groove 23, with the plurality of through holes 250 of the restricting plate 25 aligned and fastened to the plurality of threaded holes 231 of the recess 230 and the through groove 23 by screws (N). Finally, put the holding knob 27 on the top of the sliding rod 260, thereby completing the assembly of the invention.

In using, as shown in Figs. 3 ∼ 8, when the steering wheel lock is to be locked on a steering wheel (A) of an automobile, firstly hold the locking portion 21 of the steering wheel lock 2 to fit with some portion of the steering wheel (A), with the stationary rod 22 resting on an instrumental panel (not shown) of the automobile. Secondly, grasp the holding knob 27 to drag the locking member 26 toward the locking portion 21, with the sliding grooves 262 of the locking member 26 movably engaged with the restricting plate 25, by which the sliding rod 260 can be moved inside the through groove 23 steadily along the sliding rail 251 of the restricting plate 25 until the sliding rod 260 is touched against an inner wall of the through groove 23 and the blocking plate 263 is stopped by a lower portion of the locking portion 21 to keep the steering wheel (A) besieged between the locking portion 21 and the blocking plate 263. Finally, make the through hole 261 of the dead locking member 26 correspond to the dead bolt hole 232 of the through groove 23 and press the pressing lock core 24 to enable the dead bolt 240 to pass through the through hole 261 of the locking member 26 to be positioned in the dead bolt hole 232. The steering wheel lock 2 is thus locked on the steering wheel (A).

If the steering wheel lock 2 is to be unlocked, firstly, insert a key into the keyway 241 of the pressing lock core 24 to turn around a lock core so as to pull back the dead bolt 240 from the dead bolt hole 232 through the through hole 261. Then, grab and drag the holding knob 27 to keep the locking member 26 removed from the lower portion of the locking portion 21 without locking the steering wheel (A), by which the steering wheel lock 2 can be moved away from the steering wheel (A).

While the preferred embodiment of the invention has been described above, it will be recognized and understood that various modifications may be made therein and the appended claims are intended to cover all such modifications that may fall within the spirit and scope of the invention.

## Claims

1. An automobile steering lock comprising a base (20), a locking portion (21) formed in front of said base (20), a stationary rod (22) formed behind said base (20); and,
**characterized by** said base (20) having a through groove (23) formed in said base (20) and a pressing lock core (24) located at an outer side of said base (20), said through groove (23) provided with a dead bolt hole (232) bored on one of inner sidewalls thereof, said pressing lock core (24) provided with a dead bolt (240) able to pass through said through groove (23) to enter said dead bolt hole (232);
a restricting plate (25) attached on a bottom of said through groove (23) and provided with a sliding rail (251) formed centrally and a plurality of through holes (250); and,
a locking member (26) capable of being fitted in said through groove (23) and provided with a sliding rod (260) formed at a top portion thereof, a through hole (261) bored horizontally through said sliding rod (260) for being inserted by said dead bolt (240) of said pressing lock core (24), and at least one sliding groove (262) cut near a bottom of said sliding rod (260), said locking member (26) also provided with a blocking plate (263) formed at a bottom thereof.

2. The automobile steering lock as claimed in Claim 1, wherein said through groove (23) is provided with a recess (230) formed on a bottom thereof; a plurality of threaded holes (231) bored in said through groove (23) and said recess (230).

3. The automobile steering lock as claimed in Claim 1, wherein said blocking plate (263) of said locking member (26) is L-shaped.

4. The automobile steering lock as claimed in Claim 1, wherein a top of said sliding rod (260) of said locking member (26) is mounted with a holding knob (27).
